# EUROPEAN PATENT APPLICATION

(11) **EP 3 514 325 A1**
(43) Date of publication of application: **24.07.2019**
(21) Application number: 18212402.4
(22) Date of filing: 13.12.2018
(51) Int. Cl.: F01D 5/02, F16D 1/06, F16D 1/076, F04D 29/32

(54) **FAN DISC ASSEMBLY**

(30) Priority: 12.01.2018 GB 201800513
(71) Applicant: Rolls-Royce plc, London SW1E 6AT (GB)
(72) Inventor: Breen, Clive, Derby, Derbyshire DE24 8BJ (GB)
(74) Representative: Rolls-Royce plc

(57) **Abstract**

The present disclosure concerns a fan disc assembly, and in particular a fan disc assembly for a gas turbine engine. Example embodiments disclosed include a fan disc assembly (2100) for a gas turbine engine, comprising: a fan disc (2101) with a central bore comprising a bore forward section (2104), a bore aft section (2106) and a bore spline (2105) between the bore forward and aft sections; a shaft (2102) mounted within the central bore of the fan disc (2101), the shaft (2102) comprising a shaft forward section (2107) connected to the bore forward section (2104), a shaft aft section (2109) connected to the bore aft section (2106) and a shaft spline (2108) between the forward and aft sections and mating with the bore spline (2105), wherein an outer radial surface of the bore forward section (2104) is secured to an inner radial surface of the shaft forward section (2107) with a first interference fit (2115).

## Description

The present disclosure concerns a fan disc assembly, and in particular a fan disc assembly for a gas turbine engine.

Fan disc assemblies for gas turbine engines typically comprise a fan disc mounted to a shaft. Torque is transmitted from the shaft to the fan disc to rotate the fan disc and the associated blades, providing a substantial proportion of the propulsion generated by the engine. Typically this is achieved by transferring a torque load from a spline on the shaft to a corresponding spline on an internal bore of the fan disc, the splines comprising spline teeth which interconnect to transfer the torque. Radial loads or movement during use may cause wear on the splines. It is therefore desirable to limit radial loads or radial movement of the fan disc relative to the shaft. Additional features to secure the fan disc to the shaft are therefore required.

According to a first aspect there is provided a fan disc assembly for a gas turbine engine, comprising:
a fan disc with a central bore comprising a bore forward section, a bore aft section and a bore spline between the bore forward and aft sections; and
a shaft mounted within the central bore of the fan disc, the shaft comprising a shaft forward section connected to the bore forward section, a shaft aft section connected to the bore aft section and a shaft spline between the forward and aft sections and mating with the bore spline,
wherein an outer radial surface of the bore forward section is secured to an inner radial surface of the shaft forward section with a second interference fit.

An outer radial surface of the bore aft section may be secured to an inner radial surface of the shaft aft section with a first interference fit.

The first interference fit limits relative movement and radial load, protecting the bore spline and shaft spline. The arrangement of the first interference fit means that the shaft aft section forms the outside, larger diameter component of the interference fit.

In conventional arrangements, the fan disc must be heated to engage or disengage the interference fit. In the present arrangement, however, the shaft may instead be heated to allow connection or disconnection of the fan disc and shaft. In particular, the shaft aft section may be locally heated to allow engagement or disengagement of the first interference fit. The shaft may be heated via an internal bore of the shaft, and so heating the shaft aft section may be easier than heating the bore aft section, as is done in conventional arrangements.

The second interference fit may provide similar advantages to the first interference fit, but for the forward sections rather than the aft sections. The second interference fit may similarly be engaged or disengaged by heating the shaft, particularly by heating the shaft forward section.

In some embodiments, the shaft forward section may have a circular tubular extension secured within a correspondingly shaped slot in the bore forward section.

The fan disc assembly may comprise an aft collar having an inner radial surface secured to an outer radial surface of the bore aft section with an interference fit. The aft collar may be secured to the shaft aft section with a plurality of bolts.

In some embodiments, the fan disc assembly may comprise a fastening mechanism attached to the forward shaft section and positioned to prevent axial translation of the fan disc relative to the shaft. The fastening mechanism may comprise a ring nut surrounding the forward shaft section and secured against the forward bore section. In embodiments comprising a forward collar, the fastening mechanism or ring nut may be secured against the forward collar.

In some embodiments, the disc assembly may comprise a forward and/or aft collar. In particular, the bore aft section or shaft aft section may comprise (or be attached to) an aft collar, and the first interference fit may be between the aft collar and the other of the shaft aft section and bore aft section. Similarly the bore forward section or shaft forward section may comprise (or be attached to) a forward collar, and the second interference fit may be between the forward collar and the other of the shaft forward section and bore forward section.

According to a second aspect there is provided a fan disc assembly for a gas turbine engine, comprising:
a fan disc with a central bore comprising a bore forward section, a bore aft section and a bore spline between the bore forward and aft sections; and
a shaft mounted within the central bore of the fan disc, the shaft comprising a shaft forward section connected to the bore forward section, a shaft aft section connected to the bore aft section and a shaft spline between the forward and aft sections and mating with the bore spline; and
an aft collar secured to the shaft aft section with a plurality of bolts,
wherein an outer radial surface of the bore forward section is secured to an inner radial surface of the shaft forward section with a second interference fit.

In some embodiments, the aft collar may have an inner radial surface secured to an outer radial surface of the bore aft section with an interference fit.

In some embodiments, the aft collar is secured to the bore aft section with a plurality of bolts.

According to a third aspect there is provided a method of assembling a fan disc assembly according to any embodiment of the first aspect, the method comprising:
heating the shaft;
positioning the fan disc relative to the shaft such that the outer radial surface of the bore forward section is adjacent to the inner radial surface of the shaft forward section; and
cooling the shaft such that an interference fit is formed between the outer radial surface of the bore forward section and the inner radial surface of the shaft forward section.

Cooling the shaft may comprise actively cooling the shaft, or allowing the shaft to cool naturally.

According to a fourth aspect there is provided a method of disassembling a fan disc assembly according to any embodiment of the first aspect, the method comprising:
heating the shaft such that the inner radial surface of the shaft forward section disengages from the outer radial surface of the bore forward section; and
removing the fan disc from the shaft.

The skilled person will appreciate that, except where mutually exclusive, a feature described in relation to any one of the above aspects may be applied mutatis mutandis to any other aspect. Furthermore except where mutually exclusive any feature described herein may be applied to any aspect and/or combined with any other feature described herein.

Embodiments will now be described by way of example only, with reference to the Figures, in which:
**Figure 1** is a sectional side view of a gas turbine engine;
**Figure 2** is a further sectional view of a forward section of a gas turbine engine;
**Figure 3** is a partial cutaway view of an example fan disc assembly;
**Figure 4** is a perspective view of a forward end portion of an example shaft for mounting a fan disc;
**Figure 5** is a detail sectional view of a connection between the fan disc and shaft of the fan disc assembly of figure 3;
**Figures 6 to 16** are schematic representations of alternative example connection arrangements between a fan disc and a shaft;
**Figure 17a** is a schematic representation of an alternative example connection arrangement between a fan disc and a shaft;
**Figure 17b** is a schematic representation of teeth of the example connection arrangement of figure 17a;
**Figure 18a** is a schematic representation of an alternative example connection arrangement between a fan disc and a shaft;
**Figure 18b** is a schematic representation of teeth of the example connection arrangement of figure 18a;
**Figures 19 to 25** are schematic representations of alternative example connection arrangements between a fan disc and a shaft.

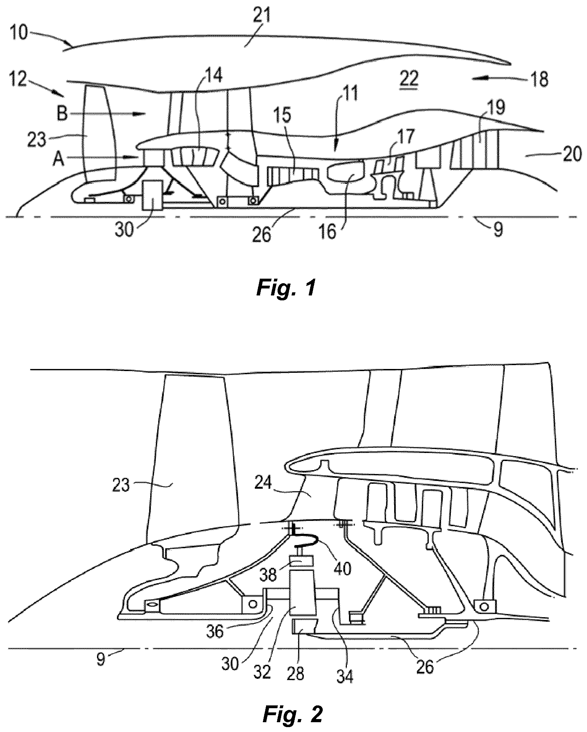

Referring to Figure 1, a two-shaft gas turbine engine 10 has a principal rotational axis 9. The engine 10 comprises an air intake 12 and a propulsive fan 23 that generates two airflows A and B. The gas turbine engine 10 comprises a core engine 11 having, in axial flow A, a low pressure booster compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines, in axial flow B, a bypass duct 22 and a bypass exhaust nozzle 18. The fan 23 is attached to and driven by the low pressure turbine 19 via shaft 26 and epicyclic gearbox 30.

The gas turbine engine 10 works in a conventional manner so that air in the core airflow A is accelerated and compressed by the high pressure booster compressor 14 and directed into the high pressure compressor 15 where further compression takes place. The compressed air exhausted from the high pressure compressor 15 is directed into the combustion equipment 16 where it is mixed with fuel and the mixture combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft. The fan 23 normally provides the majority of the propulsive thrust. The epicyclic gearbox 30 is a reduction gearbox.

A known mechanical arrangement for a two-shaft geared fan gas turbine engine 10 is shown in Figure 2. The low pressure turbine 19 (Figure 1) drives the shaft 26, which is coupled to a sun wheel, or sun gear, 28 of the epicyclic gear arrangement 30. Radially outwardly of the sun gear 28 and intermeshing therewith, in conventional manner, is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis independently. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to stationary structure 24.

The epicyclic gearbox 30 is of the planetary type, in that the planet carrier 34 rotates about the sun gear 28 and is coupled to an output shaft, linkages 36. In other applications the gearbox 30 may be a differential gearbox in which the ring gear 38 also rotates in the opposite sense and is coupled to a different output shaft via linkages 40.

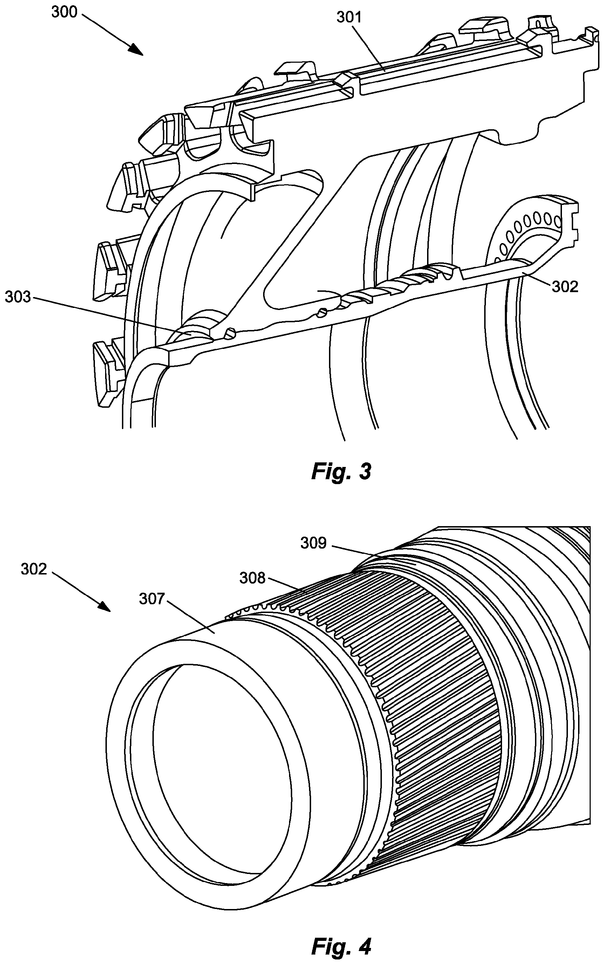

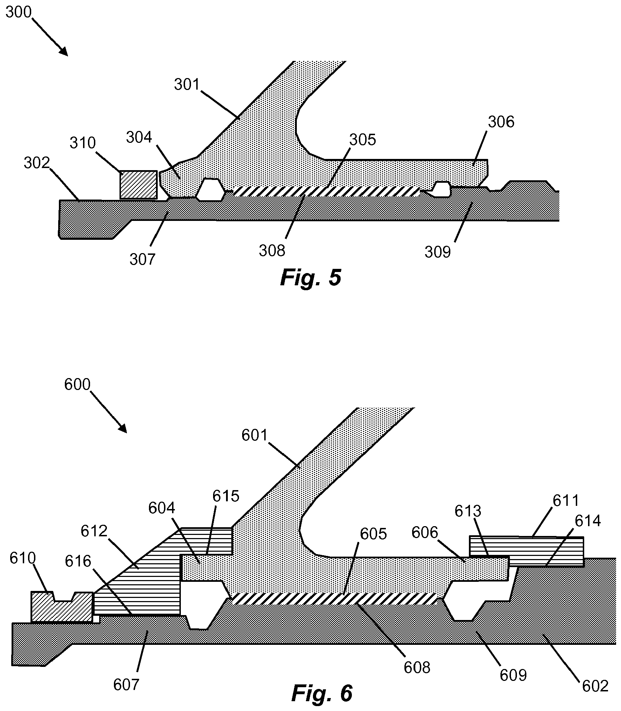

Figure 3 shows a partial cutaway view of an example fan disc assembly 300, Figure 4 shows a view of an end portion of the shaft from the fan disc assembly 300, and Figure 5 shows a detailed sectional view of the connection between the fan disc and shaft of the assembly 300. The fan disc assembly 300 comprises a fan disc 301 and a shaft 302, the shaft 302 being co-axially located within a bore 303 of the fan disc 301. A connection portion of the fan disc 301, i.e. a portion of the fan disc 301 that mechanically connects with the shaft 302, comprises a bore forward section 304, a bore spline 305, and a bore aft section 306. A corresponding connection portion of the shaft 302 comprises a shaft forward section 307, a shaft spline 308, and a shaft aft section 309. Corresponding interlocking formations or teeth on the bore spline 305 and shaft spline 308 allow torque to be transmitted between the shaft 302 and the fan disc 301.

Interference fits may be used to secure the bore forward section 304 to the shaft forward section 307 and the bore aft section 306 to the shaft aft section 309. These connections protect the spline teeth from radial load and movement that would tend to lead to wear, and provide a positive location of the fan disc 301 relative to the shaft 302. In particular, each of the shaft forward section 307 and shaft aft section 309 comprise a spigot connected to a corresponding socket in the bore forward and aft sections 304, 306 respectively by an interference fit. The spigot of the shaft aft section 309 has a larger outer radius than that of the shaft forward section 307 to allow the bore aft section 306 to pass over the shaft spline 308 on assembly.

Assembly is achieved by heating the fan disc 301 and manipulating the fan disc 301 rearwards (i.e. from left to right in Figures 3 and 5) relative to the shaft 302. The assembly 300 may be secured into place using a ring nut 310 (shown in Figure 5), which reacts through a rear face of the fan disc 301 to a seal assembly (not shown).

After assembly, the fan disc 301 is left to cool, which results in engagement of the interference fits between the bore forward section 304 and the shaft forward section 307, and between the bore aft section 306 and the shaft aft section 309.

The processes of heating and cooling the fan disc 301 is energy and time inefficient, as a large mass must be heated, and can also results in problems relating to handling a hot fan disc 301.

After assembly, the fan disc 301 may need to be removed from the shaft 302, for example during maintenance or repair of the engine. With the fan disc assembly 300 of the type shown in Figures 3 to 5, however, there is limited access to heat the aft sections 306, 309 for disengagement (e.g. by heating the interference fit). The fan disc 301 may therefore need to be forced off the shaft 302, causing potential damage to the fan disc aft section 306. This could result in the need to repair or even scrap the fan disc 301, which can be an expensive operation. Typically the fan disc 301 will be formed from a titanium alloy, whereas the shaft 302 will be formed of a steel alloy. The titanium alloy fan disc 301 will generally therefore be more susceptible to damage than the harder steel shaft 302.

Furthermore, tight clearances between the spigots on the shaft forward and aft sections 307, 309 result in the need for accurate manipulation of the fan disc 301 during removal to reduce the risk of damaging the bore aft section 306 on the shaft spline 308. Enabling accurate manipulation of the fan disc 301 over the length of the shaft spline 308 as well as allowing for rotation (for helical splines) is difficult and costly.

Figure 6 shows an example alternative connection arrangement for a fan disc assembly of the type shown in Figure 3. Similarly to the fan disc assembly 300 of Figure 3, the fan disc assembly 600 in Figure 6 comprises a fan disc 601 and a shaft 602, the shaft 602 being located within a bore of the fan disc 601, and co-axially with the fan disc 601. A connection portion of the fan disc 601 comprises a bore forward section 604, a bore spline 605, and a bore aft section 606. A corresponding connection portion of the shaft 602 comprises a shaft forward section 607, a shaft spline 608, and a shaft aft section 609. Corresponding interlocking formations or teeth on the bore spline 605 and shaft spline 608 allow torque to be transmitted between the shaft 602 and the fan disc 601. The fan disc assembly 600 further comprises a fastening mechanism such as a ring nut 610, which serves to further secure the fan disc 601 in place around the shaft 602.

In contrast to the example fan assembly 300 of Figure 3, the fan assembly 600 in figure 6 comprises an aft collar 611 and a forward collar 612. The aft collar 611 is connected to the bore aft section 606 by a first interference fit 613, and to the shaft aft section 609 by a second interference fit 614. Similarly, the forward collar 612 is connected to the bore forward section 604 by a third interference fit 615, and to the shaft forward section 607 by a fourth interference fit 616. The interference fit 613 between the bore aft section 606 and the aft collar 611 may be greater than the interference fit 614 between the shaft aft section 609 and the aft collar 611, so that the first interference fit 613 remains engaged during assembly. The first interference fit 613 is between a radially outer surface of the bore aft section 606 and a radially inner surface of the aft collar 611. The second interference fit 614 is between a radially outer surface of the shaft aft section 609 and a radially inner surface of the aft collar 611. The third interference fit 615 is between a radially outer surface of the bore forward section 604 and a radially inner surface of the forward collar 612. The fourth interference fit 616 is between a radially outer surface of the shaft forward section 607 and a radially inner surface of the forward collar 612.

The aft collar 611 and forward collar 612 may be attached to the fan disc 601 before the fan disc 601 is assembled with the shaft 602. The collars 611, 612 thus may effectively act as replaceable extensions of the bore aft section 606 and bore forward section 604. To assemble the fan disc assembly 600, the second and fourth interference fits 614, 616 may be formed after heating, similarly to assembly of a conventional fan disc assembly. During disassembly of the fan disc assembly 600, any damage due to disconnection may be limited to the aft collar 611, rather than the bore aft section 606. The aft collar 611 (and similarly the forward collar 612) may be easily replaceable, so any damage can be corrected for without having to repair or replace the fan disc 601 itself. Furthermore, due to the replicability of the aft collar 611, the need for accurate manipulation of the fan disc 602 during removal may be reduced or avoided.

In alternative embodiments, the forward collar 612 may be omitted. For example, an interference fit may directly connect the bore forward section 604 to the shaft forward section 607, as in the fan disc assembly 300 of Figure 3. Disassembly of the fan disc assembly may still be achieved without damaging the fan disc, because local heating of the forward section of the fan disc can be more easily achieved than heating of the entire assembly.

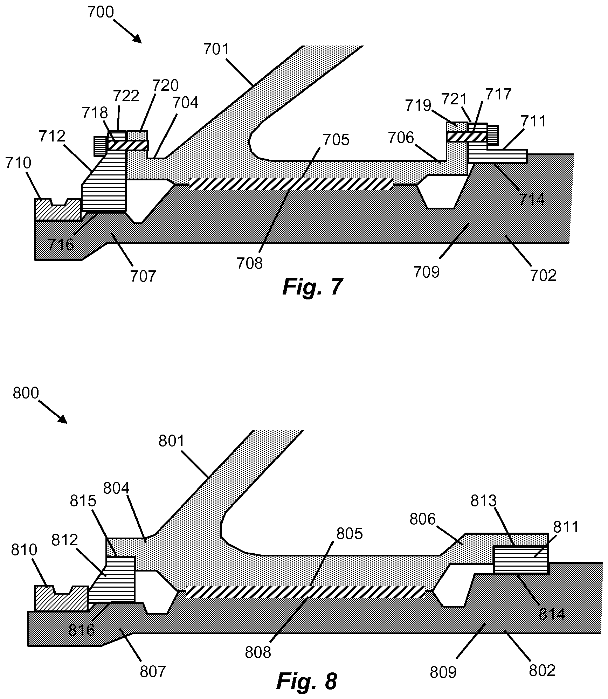

Figure 7 shows an alternative fan disc assembly 700, which is similar to the fan disc assembly 600 in Figure 3, in particular in that each of features 701 to 710 corresponds to equivalent features 601 to 610 of the fan disc assembly 600. Also similarly to the fan disc assembly 600 of Figure 6, the fan disc assembly 700 of Figure 7 comprises an aft collar 711 and a forward collar 712 secured to the shaft aft section 709 and shaft forward section 707 respectively by interference fits 714, 716. In contrast to collars 611, 612, the aft and forward collars 711, 712 are attached to the respective bore aft section 706 and bore forward section 704 by fasteners such as bolts 717, 718. The bolts 717, 718 represent a plurality of bolts extending around an outer circumference of the aft and forward sections of the fan disc bore and the aft and forward collars 711, 712. The bore aft and forward sections 706, 704 each comprise a flange 719, 720, which is fastened to a corresponding flange 721, 722 on the aft collar 711 and forward collar 712 respectively.

In alternative embodiments, one of the aft collar 711 and forward collar 712 may be connected to the respective section of the fan disc 701 by an interference fit. In some alternative embodiments the forward collar 712 may be omitted and instead integrated with the forward section 704 of the fan disc 701.

Figure 8 shows an alternative fan disc assembly 800 having features 801-816 similar to equivalent features 601-616 of the fan disc assembly 600 of Figure 6. In contrast to the fan disc assembly 600 of Figure 6, in the fan disc assembly 800 of Figure 8 the first interference fit 813 is between a radially inner surface of the bore aft section 806 and a radially outer surface of the aft collar 811. The second interference fit 814 is between a radially outer surface of the shaft aft section 809 and a radially inner surface of the aft collar 811. The third interference fit 815 is between a radially inner surface of the bore forward section 804 and a radially outer surface of the forward collar 812. The fourth interference fit 816 is between a radially outer surface of the shaft forward section 807 and a radially inner surface of the forward collar 812.

The collars 811, 812 may be connected to the fan disc 801 by heating the fan disc 801 and/or by freeze fitting the collars 811, 812. The fan disc 801 and collars 811, 812 may then be attached to the shaft 802 as described above. Alternatively the aft collar 811 may be heated and preassembled onto the shaft 802 before the fan disc 801 is heated and assembled.

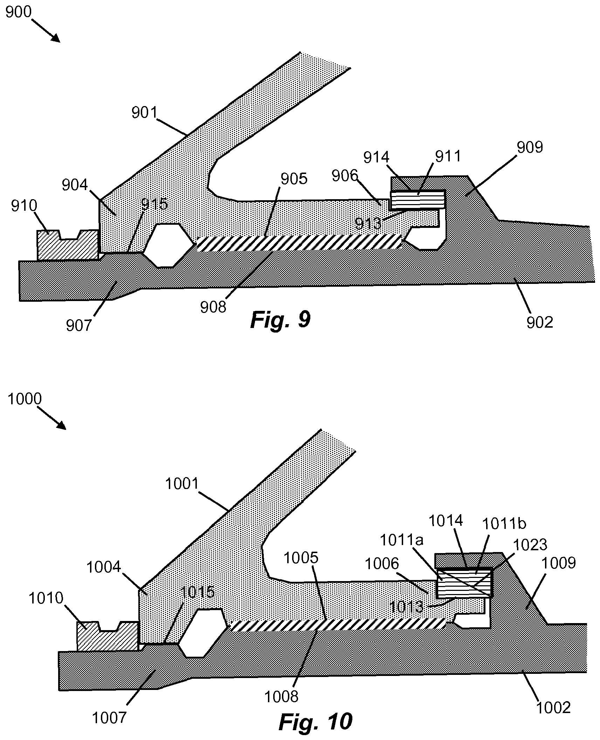

Figure 9 shows an alternative fan disc assembly 900, which is similar to the fan disc assembly 800, with features 901 to 911, 913 and 914 corresponding to equivalent features 801 to 811, 813 and 814 of fan disc assembly 800. In contrast to the fan disc assembly 800 of Figure 8, in the fan disc assembly 900 of Figure 9, a first interference fit 913 is between an outer radial surface of the bore aft section 906 and an inner radial surface of the aft collar 911. A second interference fit 914 is between an inner radial surface of the shaft aft section 909 and an outer radial surface of the aft collar 911. Furthermore, the fan disc assembly 900 does not comprise a forward collar, but instead comprises a third interference fit 915 between an inner radial surface of the bore forward section and an outer radial surface of the shaft forward section, which is similar to the connection between the forward sections 304, 307 in the fan disc assembly 300 of Figures 3 to 5.

In this arrangement, the aft collar 911 may be attached to the shaft aft section 909 by locally heating the shaft 902 in the vicinity of shaft aft section 909, rather than by heating the collar 911 or fan disc 901. Heating the shaft 902 may be relatively easier than heating the other components, because a bore of the shaft 901 provides access to the required target area.

Figure 10 shows a further alternative fan disc assembly 1000. Each of features 1001 to 1010 corresponds to an equivalent feature in the embodiments of Figures 3 to 9. The fan disc assembly 1000 comprises an aft collar that is divided into a first aft collar 1011a secured to the bore aft section 1006 by a first interference fit 1013 and a second aft collar 1011b secured to the shaft aft section 1009 by a second interference fit 1014. The first interference fit 1013 is between an outer radial surface of the bore aft section 1006 and an inner radial surface of the first aft collar 1011a. A second interference fit 1014 is between an inner radial surface of the shaft aft section 1009 and an outer radial surface of the second aft collar 1011b.

The first and second aft collars 1011a, 1011b have corresponding tapered surfaces 1023 arranged such that, when the fan disc 1001 is in position around the shaft 1002, the corresponding tapered surfaces mate against one another. The tapered surfaces of the collars 1011a, 1011b provide radially centering positioning of the fan disc 1001 when a fastening mechanism such as the ring nut 1010 is fastened in place against the bore forward section 1004, allowing radial loads to be transferred across the interface between the collars 1011a, 1011b.

Advantageously, if the fan disc 1001 is to be removed from the shaft 1002, the aft collars 1011a, 1011b (and hence the fan disc 1001 and shaft 1002) may be simply pulled apart without application of heat. There is no need to disconnect an aft interference fit, so damage due to removal of the fan disc 1001 is much less likely than for the conventional assembly 100. If any damage does occur, it will occur to the collars 1011a, 1011b, which may be easily replaced as described above.

The bore forward section 1004 is attached directly to the shaft forward section 1007 by a third interference fit 1015, although in alternative embodiments a forward collar may be used, similar to those described in the embodiments above. The interference fit 1015 between the forward sections 1004, 1007 firmly attaches the fan disc 1001 to the shaft 1002, and may be relatively easily disconnected by local application of heat, because the forward sections 1004, 1007 are more easily accessed than the aft sections 1006, 1009.

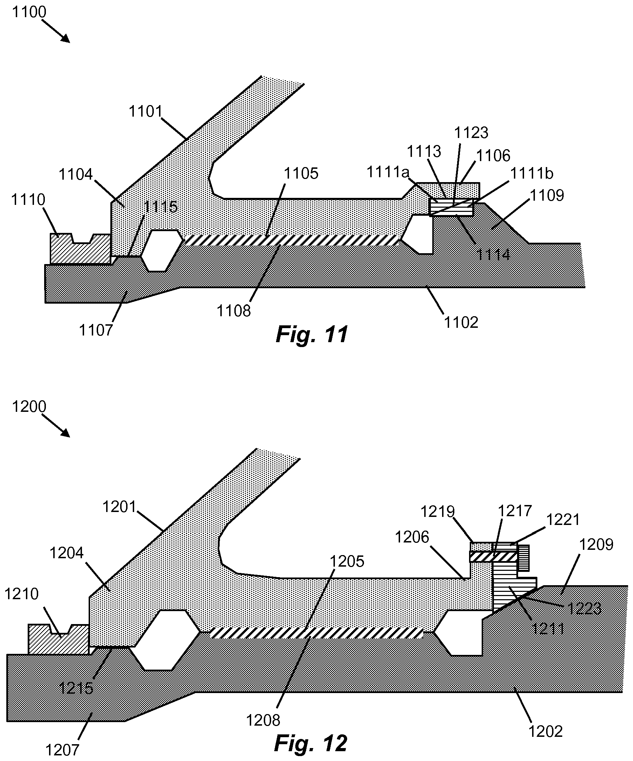

Figure 11 illustrates an alternative fan disc assembly 1100, which is similar to the fan disc assembly 1000 in Figure 10, with each of the features 1101 to 1115 and 1123 corresponding to equivalent feature 1001 to 1015 and 1023 of the fan disc assembly 1000 of Figure 10. However, in the fan disc assembly 1100 a first interference fit 1113 is between an inner radial surface of the bore aft section 1106 and an outer radial surface of the first aft collar 1111a. A second interference fit 1114 is between an outer radial surface of the shaft aft section 1109 and an inner radial surface of the second aft collar 1111b. As with the fan disc assembly 1000 of Figure 10, tapered surfaces 1123 are arranged such that, when the fan disc 1101 is in position around the shaft 1102, the corresponding tapered surfaces 1123 mate against one another and provide radial centering of the fan disc 1101 when a fastening mechanism such as the ring nut 1110 is fastened in place against the bore forward section 1104, allowing radial loads to be transferred across the interface between the collars 1111a, 1111b.

Figure 12 shows a further alternative fan disc assembly 1200, which is similar to the fan disc assembly 700 of Figure 7, with each of features 1201 to 1211 corresponding to equivalent features 701 to 711 of fan disc assembly 700. However, instead of an interference fit securing the aft collar 1211 to the shaft aft section 1209, the aft collar 1211 comprises a tapered surface which mates against a corresponding tapered surface of the shaft aft section 1209 to form a slidable, tapered interface 1223 similar to that between the first and second aft collars 1011a, 1011b in Figure 10 and collars 1111a, 1111b in Figure 11. This provides a similar advantage to that of the fan disc assemblies 1000, 1100 in Figures 10 and 11, positively positioning the fan disc 1201 radially whilst enabling relatively easy, heat-free disconnection of the aft sections 1206, 1209.

In the fan disc assembly 1200, the bore forward section 1204 and shaft forward section 1207 are connected by an interference fit 1215. The aft collar 1211 is connected to the bore aft section 1206 by a plurality of bolts 1217 extending around the circumference of the aft collar 1211 and passing through flange portions 1219, 1221 of the bore aft section 1206 and aft collar 1211 respectively.

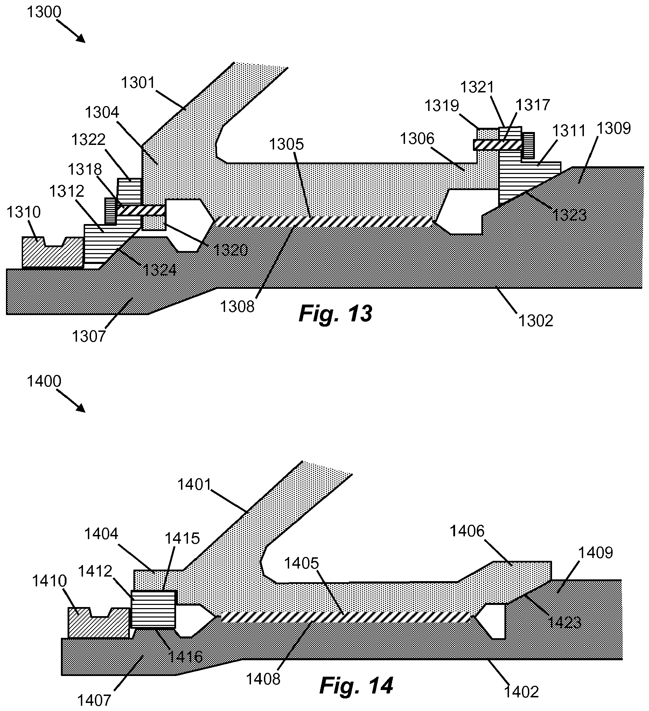

Figure 13 shows a further alternative fan disc assembly 1300, which is similar to the fan disc assembly 700 in Figure 7, with each of the features 1301 to 1312 and 1317 to 1322 corresponding to equivalent features 701 to 712 and 717 to 722 of the fan disc assembly 700. However, instead of interference fit between the collars 711, 712 and the fan disc 701 and shaft 702, the fan disc assembly 1300 has a forward collar 1312 having a tapered surface mating against a corresponding tapered surface of the shaft forward section 1307, forming a tapered interface 1324. Similarly, the aft collar 1311 has a tapered surface mating against a corresponding tapered surface of the shaft aft section 1309, forming a tapered interface 1323. The forward collar 1312 is fastened to the bore forward section 1304 by a plurality of bolts 1318, while the aft collar 1311 is similarly fastened to the bore aft section 1306 by a plurality of bolts 1317. The plurality of bolts 1317 pass through a flange portion 1321 of the aft collar 1311 and at least partway through the flange portion 1319 of the bore aft section 1306, securing the aft collar 1311 to the bore aft section 1306. The plurality of bolts 1318 pass through a flange portion 1322 of the forward collar 1312 and at least partway through a flange portion 1320 of the bore forward section 1304, securing the forward collar 1312 to the forward bore section 1304.

In the arrangement shown in Figure 13, there is no interference fit between the fan disc 1301 and the shaft 1302. The ring nut 1310 co-operates with the tapered interfaces 1323, 1324 to radially secure the fan disc 1301 on to the shaft 1302. Thus, no heat is required to connect or disconnect either the forward sections 1304, 1307 or aft sections 1306, 1309, thereby reducing time and costs for assembling/disassembling the fan disc assembly 1300.

Figure 14 shows a further alternative fan disc assembly 1400, which comprises a fan disc 1401 and shaft 1402, the shaft 1402 located coaxially within a bore of the fan disc 1401. The fan disc 1401 comprises a bore forward section 1404, a bore spline 1405, and a bore aft section 1406. The shaft 1402 comprises a shaft forward section 1407, a shaft spline 1408, and a shaft aft section 1409. A ring nut 1410 secures the fan disc 1401 in place around the shaft 1402. Instead of an interference fit between the bore aft section 1406 and the shaft aft section 1409, as in the fan disc assembly 300 shown in Figures 3 to 5, the bore aft section 1406 comprises a tapered surface mated against a corresponding tapered surface of the shaft aft section 1409, forming a slidable, tapered interface 1423. The tapered interface 1423 is arranged such that the radial extent of the shaft aft section 1409 increases along the shaft 1402 in the forward to aft direction. The tapered interface 1423 allows the bore aft section 1406 to be simply pulled away from the shaft aft section 1409 during disassembly, thereby limiting the potential for damage to the fan disc 1401, and avoiding the need for heating to remove an aft interference fit.

The bore forward section 1404 is connected to the shaft forward section 1407 via a forward collar 1412, similar to the forward collar 812 in the fan disc assembly 800 shown in Figure 8. The forward collar 1412 is attached to the bore forward section 1404 by a first interference fit 1415. An outer radial surface of the forward collar 1412 is secured to an inner radial surface of the bore forward section 1404 by the first interference fit 1415, while the forward collar 1412 is attached to the shaft forward section 1407 by a second interference fit 1416 between an outer radial surface of the shaft forward section 1407 and an inner radial surface of the forward collar 1412.

The forward collar 1412 may be preassembled onto the fan disc 1401 before the fan disc 1401 is positioned around the shaft 1402. The fan disc 1402 may for example be heated to allow attachment of the forward collar 1412, and then allowed to cool to form the interference fit 1415. Alternatively the forward collar 1412 may be freeze fitted onto the bore forward section 1404. The sub-assembly of fan disc 1401 and forward collar 1412 may then by attached to the shaft 1401 by positioning the aft sections 1406, 1409 to form the tapered interface 1423, and by locally heating the forward collar 1412 to allow a fit around the shaft forward section 1407, then allowing the forward collar 1412 to cool to form the second interference fit 1416.

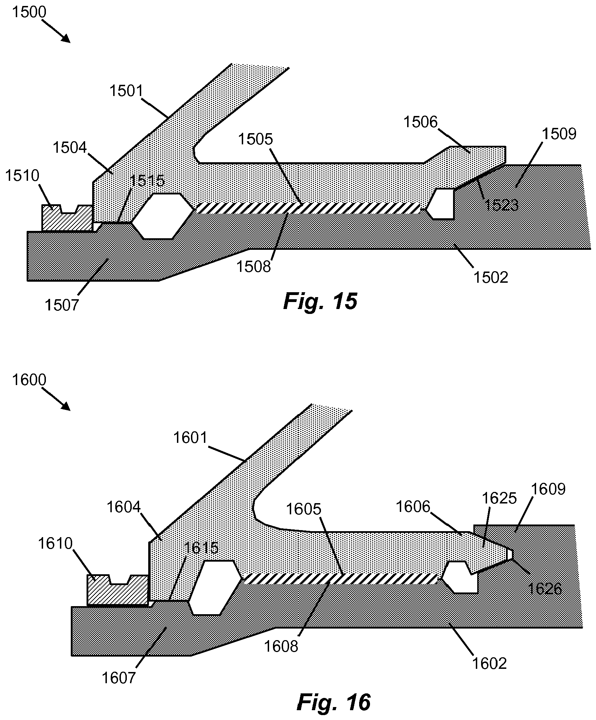

Figure 15 shows a further alternative fan disc assembly 1500, which is similar to the fan disc assembly 1400 of Figure 14, with each of the features 1501 to 1510 corresponding to the equivalent features 1401 to 1410 of the fan disc assembly 1400 of Figure 14. However, instead of using a forward collar to connect the bore forward section 1504 to the shaft forward section 1507, a direct interference fit 1515 between the bore forward section 1504 and the shaft forward section 1507 is used. The interference fit 1515 may be formed by locally heating the bore forward section 1504 of the fan disc 1501.

Figure 16 shows a further alternative fan disc assembly 1600, which is similar to the fan disc assembly 1400, with each of the features 1601 to 1610 corresponding to the equivalent features 1401 to 1410 of the fan disc assembly 1400 of Figure 14. As with other embodiments, such as that in Figure 15, an interference fit 1615 is provided between an outer radial surface of the shaft forward section 1607 and an inner radial surface of the bore forward section 1604. A different type of connection, however, is provided for between the bore aft and shaft aft sections 1606, 1609.

The bore aft section 1606 of the fan disc assembly 1600 comprises a circular, tapered sleeve 1625. In this embodiment, both the radially outer and inner surfaces of the sleeve 1625 taper towards the aft-most part of the sleeve 1625. The sleeve 1625 is received within a correspondingly shaped slot 1626 formed in the shaft aft section 1609, forming a conical coupling between the aft sections of the bore and shaft. When in position, the tapered surfaces of the sleeve 1625 mate against corresponding tapered surfaces of the slot 1626. The slot 1626 provides positive positioning of the bore aft section 1606, and allows radial loads to be transferred between the aft sections 1606, 1609. The bore aft section 1606 may be easily removed from the shaft aft section 1609 by sliding the flange 1625 out of the slot 1626, so heating of the aft sections is not required to assemble or disassemble the fan disc assembly 1600.

The bore forward section 1604 is directly connected to the shaft forward section 1607 by a direct interference fit 1615. In other embodiments, a forward collar may be used, for example similar to the forward collar 1412 in the fan disc assembly 1400 of Figure 14.

In the embodiment of Figure 16 both the radially inner and outer surfaces of the sleeve 1625, and the corresponding surfaces of the slot 1626, have a taper. In alternative embodiments, only one of the inner and outer surfaces may have a taper.

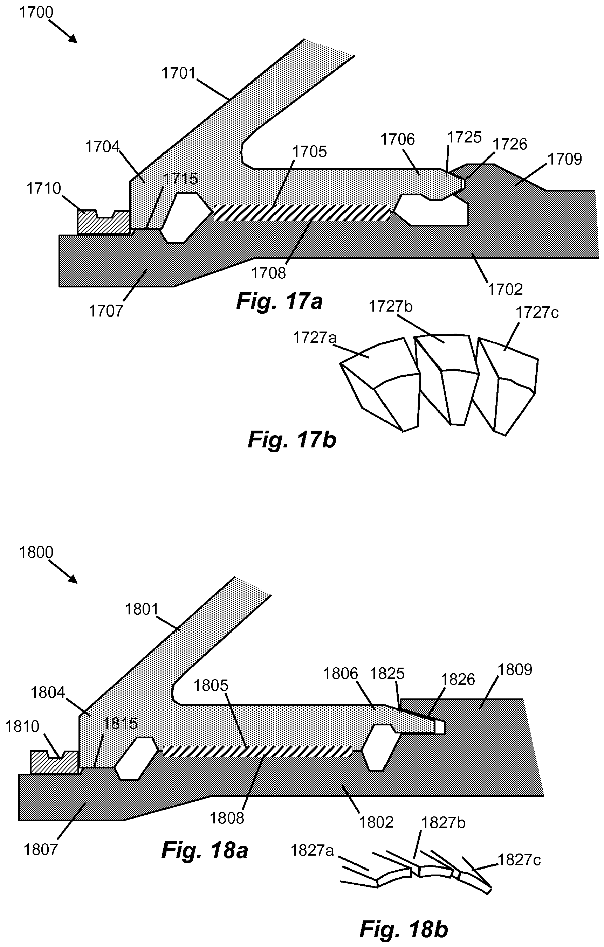

Figure 17a shows a further alternative fan disc assembly 1700, which is similar to the fan disc assembly 1600 of Figure 16, with each of features 1701 to 1710, 1715, 1725 and 1726 corresponding to the equivalent feature 1601 to 1610, 1615, 1625 and 1626 of the fan disc assembly 1600 in Figure 16.

In the embodiment shown in Figure 17a, the tapered sleeve 1725 of the bore aft section 1706 is divided into a plurality of teeth 1727a-c arranged circularly around the sleeve 1725, as shown in figure 17b. The teeth 1727a-c are tapered in the radial and axial directions, allowing the teeth some flexibility during assembly. This arrangement provides a strong interconnection between the bore aft section 1706 and shaft aft section 1709, providing positive positioning and radial load transfer. The arrangement also allows for heat-free assembly and disassembly of the aft sections 1706, 1709, as described above in relation to the fan disc assembly 1600 of Figure 16.

In the illustrated embodiment in Figure 17, the bore forward section 1704 is directly connected to the shaft forward section 1707 by a direct interference fit 1715. In other embodiments, a forward collar may be used, for example similar to the forward collar 1412 in the fan disc assembly 1400 of Figure 14.

Figure 18a shows a further alternative fan disc assembly 1800, which is similar to the fan disc assembly 1700 of Figure 17, with each of the features 1801 to 1810, 1815 and 1825 to 1827a-c corresponding to the equivalent feature 1701 to 1710, 1715 and 1725 to 1727a-c of the fan disc assembly 1700. However, in the embodiment of Figure 18 the teeth 1827a-c, shown in figure 18b, of the sleeve 1815 are configured to flex radially inwards when the sleeve 1825 is inserted into the correspondingly shaped slot 1826 in the shaft aft section 1809. Before assembly, the radius of the circular sleeve 1825 is larger than the radial extent of an external facing surface 1826 of the shaft aft section 1809. During insertion, the tapered surface 1826 of the shaft aft section 1809 forces the teeth 1827a-c radially inwards. When the sleeve 1825 is fully inserted in the slot 1826, the teeth 1827a-c are engaged against an outer radial surface of the slot 1826, securing the bore aft section 1806 to the shaft aft section 1809. The teeth 1827a-c may be biased to restore to their original expanded position upon removal from the slot 1826.

This arrangement provides similar advantages to the fan disc assembly 1700, in particular regarding positive positioning, fan disc damage avoidance, and heat free disassembly of aft sections.

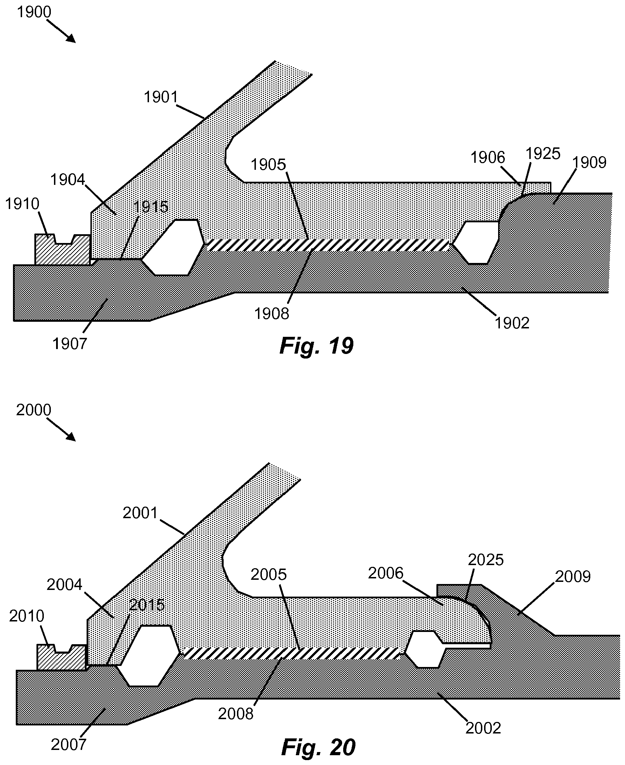

Figure 19 shows a further alternative fan disc assembly 1900, which is similar to the fan disc assembly 1500 of Figure 15, with each of the features 1901 to 1910 and 1915 corresponding to the equivalent feature 1501 to 1510 and 1515 of the fan disc assembly 1500 of Figure 15. The adjoining tapered surfaces of the bore aft section 1906 and shaft aft section 1909 which form a tapered interface 1925 have in this case a circular shaped curvature in section. The tapered interface 1925 in this embodiment is formed between an inner radial surface of the bore aft section 1906 and an outer radial surface of the shaft aft section 1909. The two surfaces act as a ball and socket type joint, accommodating a degree of articulation of the joint whilst radially locating the aft sections 1906, 1909 and enabling transfer of radial loads between the shaft 1902 and fan disc 1901. This arrangement reduces the risk of damaging the fan disc 1901 during disassembly, and enables the aft sections 1906, 1909 to be disengaged simply with axial movement in the forwards direction, without the need for heat.

The bore forward section 1904 is directly connected to the shaft forward section 1907 by a direct interference fit 1915. In other embodiments, a forward collar may be used, for example similar to the forward collar 1412 in the fan disc assembly 1400 in Figure 14.

Figure 20 shows a further alternative fan disc assembly 2000, which is similar to the fan disc assembly 1900 in Figure 19, with each of the features 2001 to 2010, 2015 and 2025 corresponding to the equivalent features 1901 to 1910, 1915 and 1925 of the fan disc assembly 1900 of Figure 19. In this case, the tapered interface 2025 is formed between a radially outer surface of the bore aft section 2006 and an inner radial surface of the shaft aft section 2009. The surfaces forming the tapered interface 2025 each have a circular shaped curvature in section, forming a ball and socket type joint in the opposite sense to that in Figure 19.

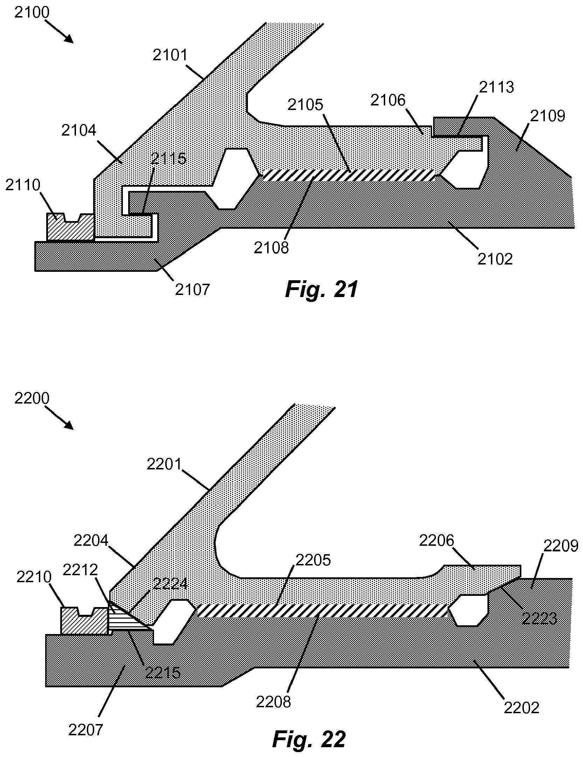

Figure 21 shows a further alternative fan disc assembly 2100. Similarly to the fan disc assembly 300 in Figures 3 to 5, the fan disc assembly 2100 comprises a fan disc 2101 and shaft 2102, the shaft 2102 coaxially located within a bore of the fan disc 2101. The fan disc 2101 comprises a bore forward section 2104, and a bore spline 2105, and a bore aft section 2106. The shaft 2102 comprises a shaft forward section 2107, a shaft spline 2108, and a shaft aft section 2109. Corresponding interlocking formations or teeth on the bore spline 2105 and shaft spline 2108 allow torque to be transmitted from the shaft 2102 to the fan disc 2101. The fan disc assembly 2100 further comprises ring nut 2110 to further secure the fan disc 2101 in place around the shaft 2102.

The bore aft section 2106 is directly attached to the shaft aft section 2109 by a first interference fit 2113. In contrast to the interference fit in the fan disc assembly 300 of Figures 3 to 5, the interference fit 2113 is formed between a radially outer surface of the bore aft section 2106 and a radially inner surface of the shaft aft section 2109.

Similarly, the bore forward section 2104 is directly attached to the shaft forward section 2107 by a second interference fit 2115, which secures a radially outer surface of the bore forward section 2104 to a radially inner surface of the shaft forward section 2107.

For both the forward and aft sections therefore, the radially outwards spigot of the interference fits 2113, 2115 is provided by the shaft 2102, and not the fan disc 2101. This means that rather than heating the fan disc 2101 to assemble the fan disc assembly 2100, the shaft 2102 may be heated to allow the fan disc 2101 to be positioned on the shaft 2102. The shaft 2102 may then be allowed to cool to form the interference fits 2113, 2115.

The shaft 2102 may be heated via an internal bore of the shaft, so it may be relatively easier to heat the shaft aft section 2109 to disengage the first interference fit 2113 than it would be to heat the bore aft section 2106, as would be required in the arrangement of fan disc assembly 300 in Figures 3 to 5. As the first interference fit 2113 may be easily disengaged, the likelihood of damage to the fan disc 2101 during disassembly is reduced.

Figure 22 shows a further alternative fan disc assembly 2200 in which a tapered surface 2223 of the shaft aft section 2209 mates against a corresponding tapered surface on the bore aft section 2206. The components of the fan disc assembly 2200 are in most cases similar to those in the example of Figure 15, and are indicated with correspondingly numbered reference signs. In comparison with the example in Figure 15, however, the connection between the forward sections 2204, 2207 of the bore and shaft in the example of Figure 22 comprises a forward collar 2212. An outer radial surface of the forward collar 2212 is tapered to match a corresponding tapered surface of the bore forward section 2204 so to allow the collar 2212 to be secured to the bore forward section 2204 when the ring nut 2210 is tightened against the collar 2212. In comparison with the example of Figures 3 to 5, the front and rear spigots are replaced with two conical interfaces, defined by the tapered interfaces 2224, 2223 of the front and aft sections. When the ring nut 2210 at the front of the assembly is tightened, there is a positive location of the rear of the fan disc bore 2201 onto the shaft 2202 to transfer radial load via the tapered interface 2223. The wedge-shaped forward collar 2212, which may for example be composed of a titanium alloy, is positioned before the nut 2210 is assembled. The wedge collar 2212 has a matching cone with the front of the disc bore 2204, which also engages when the nut 2210 is tightened. A transition fit spigot (not shown) may be applied between the collar 2212 and the steel fan shaft spigot 2215 to allow axial movement of the collar 2212 during build, and for the steel spigot 2215 to grow into contact with the Ti collar 2212 during engine running.

An advantage of the arrangement in Figure 22 is that the risk of damaging the aft spigot during stripping of the fan disc from the shaft has now been reduced by removing the need for an interference fit. The risk of damaging the forward spigot has also been transferred onto a separate component which will be cheaper to replace compared with the whole fan disc as in the baseline design. Also, no heat is required at the front and rear of the spline for disengagement of the spigot due to the spigot naturally disengaging with axial movement.

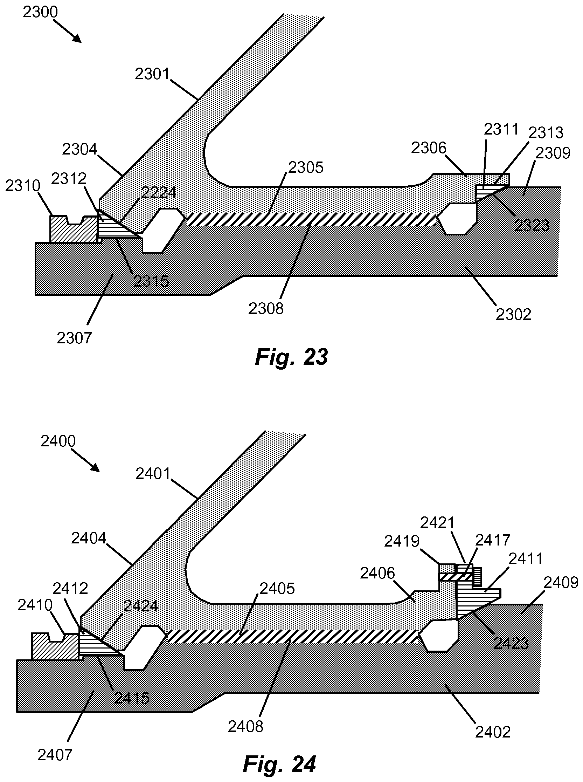

A further alternative assembly 2300 is illustrated in Figure 23, which is substantially similar to that of Figure 22, and with corresponding reference signs. However, instead of the bore aft section 2206 having a tapered surface to mate with a corresponding tapered surface of the shaft aft section 2209, an aft collar 2311 is provided to provide the tapered surface to mate with the shaft aft section 2209, defining the tapered interface 2323 between the shaft and bore aft sections 2309, 2306. The aft collar 2311 has an outer radial surface that is secured to an inner radial surface of the bore aft section 2306 with an interference fit 2313.

As with the arrangement of Figure 22, the arrangement in Figure 23 removes the front and rear spigots and replaces them with two conical interfaces. When the ring nut 2310 at the front of the assembly 2300 is tightened, there is a positive location of the rear of the fan disc 2301 onto the fan shaft 2302 to transfer radial load via the tapered interface 2323. The aft collar 2311 is interference fitted into the bore aft section 2306 of the fan disc prior to engine assembly. The forward collar 2312 is positioned before the nut 2310 is assembled. The collar 2312 has a matching cone with the front of the disc which also engages when the nut 2310 is tightened. A transition fit spigot may be applied between the collar 2312 and the steel fan shaft spigot 2315 to allow axial movement of the collar 2312 during build, and for the steel spigot 2315 to grow into contact with the Ti collar 2312 during engine running.

As with the arrangement of Figure 22, an advantage is that the risk of damaging the aft spigot during stripping of the fan disc from the shaft has now been reduced by removing the need for an interference fit. The risk of damaging the forward and aft spigots has been transferred onto separate components, which will be cheaper to replace compared with the whole fan disc. Also, no heat is required at the front and rear of the spline for disengagement of the spigot due to the spigot naturally disengaging with axial movement once the ring nut 2310 is removed.

A further alternative arrangement is illustrated in Figure 24, which is similar to that in Figure 23, and with corresponding reference signs, but with the aft collar 2411 instead attached to the bore aft section 2406 by means of a plurality of bolts 2417 passing through flanges 2421, 2419 on the collar 2411 and bore aft section 2406 respectively. As with the examples of Figures 22 and 23, this arrangement removes the front and rear spigots and replaces them with two conical interfaces. When the ring nut 2410 at the front of the assembly 2400 is tightened, there is a positive location of the bore aft section 2406 of the fan disc onto the fan shaft 2402 to transfer radial load via the tapered interface 2423. The aft collar 2411 is bolted onto the bore aft section 2406 prior to engine assembly. The forward collar 2412 is positioned before the nut 2410 is assembled. The forward collar 2412 has a matching cone with the front of the disc 2401 which also engages when the nut 2410 is tightened. A transition fit spigot may be applied between the collar 2412 and the steel fan shaft spigot 2415 to allow axial movement of the collar 2412 during build, and for the steel spigot 2415 to grow into contact with the collar 2412 during engine running.

As with the examples in Figures 22 and 23, an advantage of the arrangement in Figure 24 is that the risk of damaging the aft spigot during stripping of the fan disc from the shaft has now been reduced by removing the need for an interference fit. The risk of damaging the forward and aft spigots has been transferred onto separate components which will be cheaper to replace compared with the whole fan disc. Also, no heat is required at the front and rear of the spline for disengagement of the spigot due to the spigot naturally disengaging with axial movement.

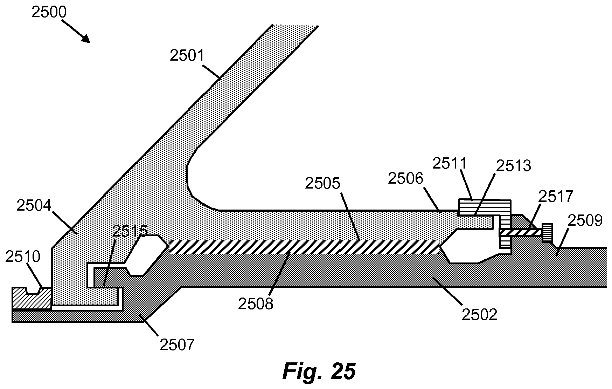

A further alternative assembly 2500 is illustrated in Figure 25. This arrangement is similar to the assembly 2100 in Figure 21, and has reference signs numbered accordingly. As in Figure 21, the inner and outer spigot features are reversed. i.e. whereas in the conventional arrangement in Figures 3-5 outer radial surfaces on the shaft are fitted against inner radial surfaces on the bore, in the arrangement in Figures 21 and 25 inner radial surfaces on the shaft are fitter against outer radial surfaces on the bore. The effect of this is that the fan disc does not need to be heated for the interference fits 2513, 2515 to be made. Instead, the shaft 2502 is heated before assembly with the fan disc 2501. For stripping the shaft from the fan disc, the shaft can be heated, for example via its internal bore, to disengage both spigot fits 2513, 2515 from the fan disc. An advantage of this is that the risk of damaging the aft spigot during a stripping operation has now been reduced.

In the arrangement shown in Figure 25, an aft collar 2511 is secured to the shaft aft section 2509 by means of a plurality of bolts 2517. The aft collar 2511 has an inner radial surface that is secured to an outer radial surface of the bore aft section 2506 by an interference fit 2513. An advantage to using the aft collar 2511 is that the fan disc can be more easily removed from the shaft during a stripping operation, as the aft section can be disengaged by removing the plurality of bolts 2517, requiring only disengagement of the interference fit 2515 between the forward sections by heating the relevant portion of the shaft 2502. The aft collar can, if required, be removed separately by localised heating of the collar 2511 before or after removal of the fan disc from the shaft.

It will be understood that the invention is not limited to the embodiments above-described and various modifications and improvements can be made without departing from the concepts herein. Except where mutually exclusive, any of the features may be employed separately or in combination with any other features and the disclosure extends to and includes all combinations and sub-combinations of one or more features described herein.

## Claims

1. A fan disc assembly (2100) for a gas turbine engine, comprising:
a fan disc (2101) with a central bore comprising a bore forward section (2104), a bore aft section (2106) and a bore spline (2105) between the bore forward and aft sections;
a shaft (2102) mounted within the central bore of the fan disc (2101), the shaft (2102) comprising a shaft forward section (2107) connected to the bore forward section (2104), a shaft aft section (2109) connected to the bore aft section (2106) and a shaft spline (2108) between the forward and aft sections and mating with the bore spline (2105); and
an aft collar (2511) secured to the shaft aft section (2509) with a plurality of bolts (2517),
wherein an outer radial surface of the bore forward section (2104) is secured to an inner radial surface of the shaft forward section (2107) with a second interference fit (2115).

2. The fan disc assembly (2100) of claim 1, wherein the shaft forward section (2107) has a circular tubular extension secured within a correspondingly shaped slot in the bore forward section (2104).

3. The fan disc assembly (2500) of claim 1 or 2, wherein the aft collar (2511) has an inner radial surface secured to an outer radial surface of the bore aft section (2506) with an interference fit (2513).

4. The fan disc assembly (700) of claim 1 or 2, wherein the aft collar (711) is secured to the bore aft section (706) with a plurality of bolts (717).

5. The fan disc assembly (2100) of any of claims 1 to 4, comprising a fastening mechanism (2110) attached to the shaft forward section (2107) and positioned to prevent axial translation of the fan disc (2101) relative to the shaft (2102).

6. The fan disc assembly (2100) of claim 5, wherein the fastening mechanism comprises a ring nut (2110) surrounding the shaft forward section (2107) and secured against the bore forward section (2104).

7. A method of assembling the fan disc assembly (2100) according to any of claims 1 to 6, the method comprising:
heating the shaft (2102);
positioning the fan disc (2101) relative to the shaft (2102) such that the outer radial surface of the bore forward section (2104) is adjacent the inner radial surface of the shaft forward section (2107); and
cooling the shaft (2102) such that the second interference fit (2115) is formed between the outer radial surface of the bore forward section (2104) and the inner radial surface of the shaft forward section (2107).

8. A method of disassembling the fan disc assembly (2100) according to any of claims 1 to 6, the method comprising:
heating the shaft (2102) such that the inner radial surface of the shaft forward section (2107) disengages from the outer radial surface of the bore forward section (2104); and
removing the fan disc (2101) from the shaft (2102).
